Europäisches Patentamt

European Patent Office

Office européen des brevets

(19)

(11) Publication number: **0 486 323 B1**

# EUROPEAN PATENT SPECIFICATION

(45) Date of publication of patent specification: **22.02.95**　(51) Int. Cl.⁶: **C03C 17/02**, C23D 13/00

(21) Application number: **91310572.2**

(22) Date of filing: **15.11.91**

(54) Method for repairing a glass layer of glass-lined equipment by a sol-gel process.

(30) Priority: **15.11.90 JP 310976/90**

(43) Date of publication of application:
**20.05.92 Bulletin 92/21**

(45) Publication of the grant of the patent:
**22.02.95 Bulletin 95/08**

(84) Designated Contracting States:
**DE FR GB**

(56) References cited:
**EP-A- 0 407 027**
**US-A- 4 478 904**

**CHEMICAL ABSTRACTS, vol. 114, no. 22, 3
June 1991, Columbus, Ohio,US; abstract no.
212620Z, page 340; & JP-A-2 258 985
(SHINKO PANTEC C0) 19 Oct. 1990**

**JOURNAL OF THE AMERICAN CERAMIC SO-
CIETY. vol. 63, no. 5-6, June 1980,COLUMBUS
US pages 280 - 285; J.P.LUCAS ET AL.: 'A
Novel Technique for ProducingFine Metal Fi-
bers for Enhancing Mechanical Properties of
Glass-MatrixComposites.'**

(73) Proprietor: **SHINKO PANTEC CO., LTD.
4-78, 1-chome Wakinohama-cho
Chuo-ku
Kobe 651 (JP)**

(72) Inventor: **Hara, Tatsuo
6-4-10-101 Sumiyoshi-miyamachi
Higashinada-ku,
Kobe 658 (JP)**
Inventor: **Uegaki, Shigeo
3-8-28 Fukae-honmachi
Higashinada-ku,
Kobe 658 (JP)**
Inventor: **Hogetsu, Akihiko
4-2-1 Kimikage-cho
Kita-ku,
Kobe 651-11 (JP)**

(74) Representative: **Hayward, Denis Edward Peter
et al
Lloyd Wise, Tregear & Co.
Norman House
105-109 Strand
London WC2R 0AE (GB)**

## Description

The present invention relates to a method for repairing a damaged portion of a glass layer coated on the inner surfaces of a vessel, e.g. a reactor or a storage tank employed in the chemical or food industries, by forming a glass on the damaged portion by a sol-gel process.

Conventional methods for repairing the glass-lined equipment referred to include:

(a) a method for installing caps and bolts, made of anticorrosive tantalum metal, in the metal substrate of the vessel and sealing the spaces between the glass layer and the caps or bolts with Teflon (Registered Trade Mark) packing (U.S. Patent No. 2,631,360); and

(b) a method of applying an anti-corrosive adhesive of an organic resin such as an epoxy resin to the damaged portion and solidifying the adhesive.

However, with method (a) there is difficulty in applying the method to a damaged portion having an intricate surface form or having a widely extending area, and the Teflon packing may allow liquid penetration due to the degradation thereof; and since the heat resistance and the solvent resistance in the case of method (b) are inferior, the application of this method is restricted.

Another conventional procedure is a so-called sol-gel process wherein an alcohol and water solution of an organic metal compound, such as a metal alkoxide which serves as a starting material, is heated to form a glass by dehydration and condensation reactions. In this sol-gel process, the higher the temperature of heating, the more the dehydration and condensation reactions are accelerated, to form a more closely bonded glass. Accordingly, the heating procedure needs to be carried out at a high temperature (e.g. 700°C to 800°C) for producing a high density glass having no voids.

However, in applying the sol-gel process to repairing a damaged portion of a glass layer of glass-lined equipment, the heating temperature would need to be restricted to about 300°C or 350°C to avoid the occurrence of cracks in the undamaged glass layer surrounding the damaged portion due to the difference in thermal expansion between the steel substrate and the glass layer. Therefore, such repairing method would take a considerable amount of time, and because of the shrinkage during the glass forming reaction, an excess thickness of the repairing agent layer in one application could cause a crack or an exfoliation in the repairing glass layer. Further, the glass formed under such a low temperature remains porous.

U.S. Patent No. 5,053,251 (corresponding to EP-A-407027) of the present applicant discloses a method comprising the steps of forming a repairing glass layer with a repairing agent containing filler materials, such as glass powder, for preventing the repairing glass layer from shrinkage during the glass forming reaction, filling the voids occurring between the particles of the filler materials with a repairing agent not containing the filler materials, and repeating said glass forming and said voids filling procedures. In this method, the heating of the repairing agent is carried out in a range from about 300°C to 350°C, with a local heating device provided with detachable heater units surrounded by a flexible insulating cover, and having magnets for attaching the device to the damaged portion. The filler materials used enable this repairing method to avoid shrinkage of the repairing glass layer during the glass forming process, to maintain the characteristics required for the repaired damaged portion, such as anti-corrosion, and to reduce the number of repeat procedures for forming a repairing layer having a satisfactory thickness (1 mm or more).

Although repairing glass layers formed according to the aforementioned method have passed the test set out in JISR4201 (steel ball dropping test to observe the bonding strength of the glass layer to the iron substrate), the bonding strength thereof is 1/10 or less of the bonding strength of the undamaged glass layer. Further, when putting the repaired glass-lined vessel into practical use, the surface smoothness of the repairing layer is inferior to that of the undamaged glass layer and residual material in the vessel tends to become adhered to it. A jet of highly pressurized water for removing the adhered material would exfoliate or lift the repairing glass layer from the substrate by the physical impact thereof.

It is therefore a primary purpose of the present invention to improve the strength of bonding of the repairing glass layer to a metal substrate.

According to the invention, there is provided a method for repairing the glass layer of equipment having a glass lining on a metal substrate, comprising the steps of (a) grinding the damaged portion of the glass layer and exposing the metal substrate; (b) welding a metallic fiber sheet, shaped to suit the damaged area, to the metal substrate; (c) applying a vitrifiable repairing agent in the form of a sol-gel solution containing a metallic alkoxide to the metallic fiber sheet to impregnate the sheet, and solidifying the repairing agent; (d) heating the repairing agent to vitrify it at a temperature not high enough to cause damaging stress in the glass layer surrounding the damaged portion as a consequence of the difference in thermal expansion between the metal substrate and said surrounding glass layer; and (e) repeating the steps (c) and (d) with fresh repairing agent to fill any remaining voids in the repaired area. In the preferred method, a metallic fiber sheet made of a metallic fiber web, a metallic woven fabric or a metallic nonwoven fabric is disposed on the metal substrate of the damaged portion exposed by grinding, and is welded to the metal substrate by spot welds or spaced linear welds formed by resistance welding. After solidification of the repairing agent sol-gel solution containing metallic alkoxide which has been applied to the welded fiber sheet to impregnate it, the repairing glass layer is formed and the fiber sheet and repairing agent are united by heating the repairing agent at a temperature (from about 300°C to about 350°C) sufficient to vitrify the repairing agent but not high enough to cause cracking of the glass layer surrounding the damaged portion. The glass-forming procedures are then repeated with fresh repairing agent until a satisfactory thickness of the repairing glass layer is obtained.

Preferably also, the repairing agent used in step (c) contains as a filler either glass or a ceramic in powder form but the repairing agent used in step (e) does not contain such filler.

Since the metallic fiber sheet is welded directly to the metal substrate of the damaged area of the glass layer, the physical bonding strength of the repairing glass layer to the metal substrate is remarkably improved.

Further, since the repairing agent applied to impregnate the metallic fiber sheet is able to form a glass through hydrolysis and a dehydration-condensation reaction, and simultaneously unites with the metallic fiber sheet, a repairing glass layer having a higher strength against physical impact is produced.

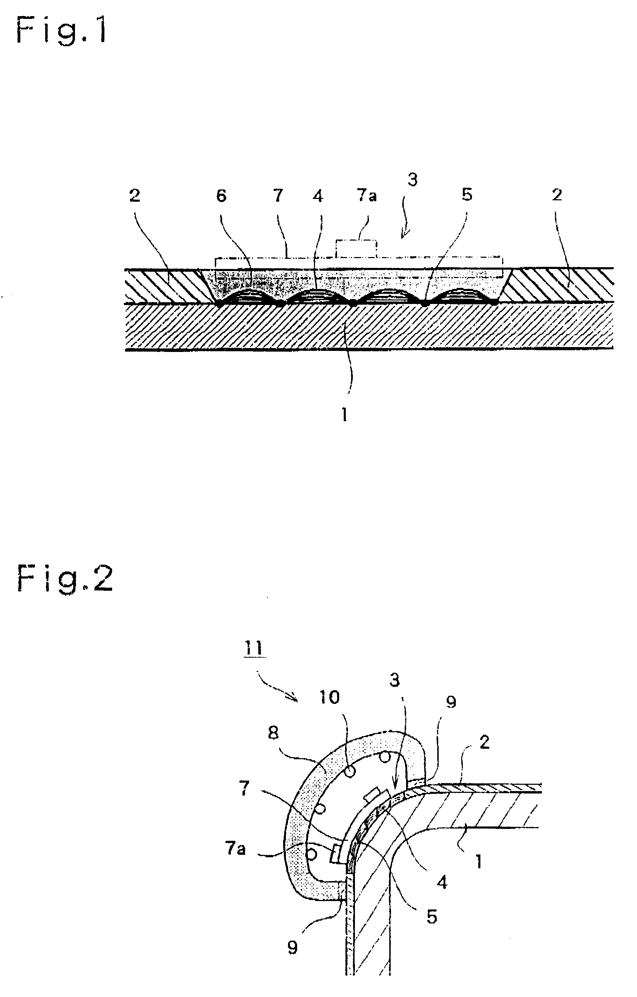

The repairing method of the present invention therefore provides improved bonding strength of a repairing glass layer to a metal substrate and makes possible an improvement in the service life of glass-lined equipment. Even if the repairing glass layer is damaged by physical impact, the damage will be restricted to a minimum area and surrounding exfoliation of the glass layer will not occur; a fresh repair can readily be made. Further, the method can be used to repair a portion of a difficult surface profile, e.g. a strongly curved area as shown in Figure 2, where the conventional tantalum repairing method would not be applicable.

Examples of preferred embodiments of the present invention will be described in detail with reference to the drawings attached hereto, in which:-

Figure 1 is an enlarged cross-sectional view of a portion of a glass lining repaired by the method of the present invention;

Figure 2 is a cross-sectional view illustrating the heating step of the method;

Figure 3 is a plan view of a metallic fiber sheet welded to the damaged portion; and

Figure 4 is a schematic view of a cleaning test on a portion of a glass lining repaired according to the present invention.

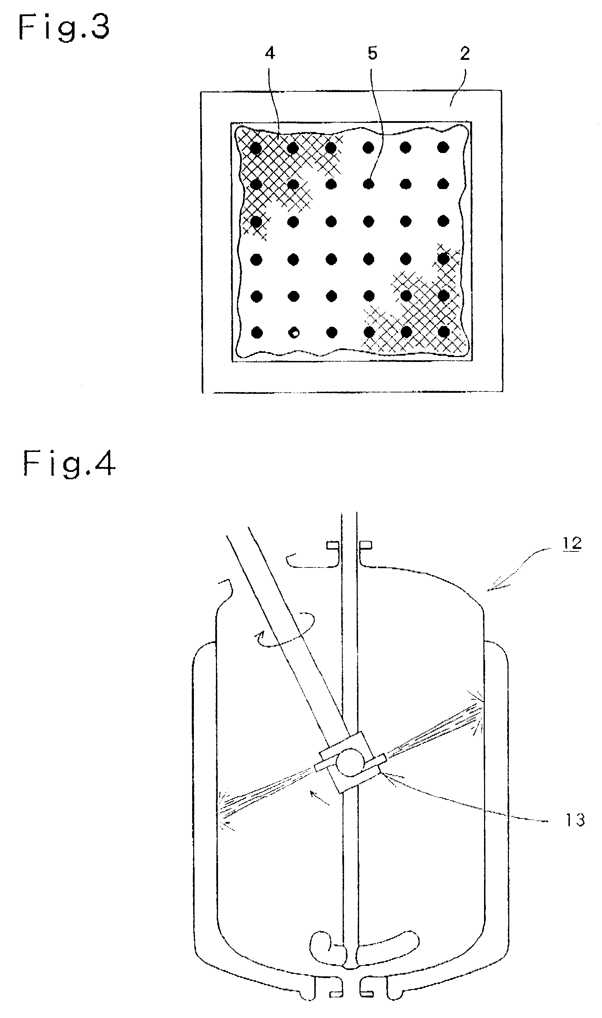

As shown in Figure 1, in order to repair the damaged portion (3) of a glass layer (2) coated on a metal substrate (1) of glass-lined equipment, the substrate (1) is exposed by grinding the portion (3) of the layer (2). A metallic fiber sheet (4) shaped to suit the area (3) is disposed on the exposed substrate (1), and welded to the substrate (1) by a resistance welding technique. The sheet (4) does not need to be welded entirely to the substrate (1) but can be welded partially thereto such as by spot welds (see Figure 3) or linear welds. The preferred interval between welds is from about 10 mm to about 15 mm, and an interval less than this preferred range may result in the metallic fiber sheet not being well impregnated with the repairing agent in the following step of the process. The metallic fiber sheet welded to the portion (3) is then impregnated with a repairing agent in the form of a sol-gel solution, and the solidified repairing agent is heated to form the repairing glass layer (6). These glass-forming steps are repeated until the thickness of the layer (6) becomes almost equal to that of the layer (2).

After applying the repairing agent and impregnating the sheet (4) therewith, the repairing glass layer is formed by pressing the impregnated sheet (4) with a plate (7), shaped to suit the damaged area, to a thickness less than that of the layer (2) to avoid projection of the metallic fiber above the surface of the repairing glass layer, heating the repairing layer at a temperature of about 300°C to 350°C, to form the repairing glass, with a heating device (11) (see Figure 2) comprising a flexible heat insulating cover (8) containing heaters (10) which is attachable to the damaged portion by magnets (9), and finally filling the voids at the surface with fresh repairing agent not containing any filler material.

The preferred repairing agent in the form of a sol-gel solution is prepared by mixing the ingredients listed in Table 1 at 25°C for one hour.

## TABLE 1

```
Silicon Tetraethoxide ..    ..    20g
85% Phosphoric Acid    ..    ..    1g
Glass Powder or Al₂O₃
  (Particle Size: 10-100 µm)    15g
Ethanol       ..    ..    ..    ..    20g
Water  ..    ..    ..    ..    ..    20g
```

Since the partial welding of the sheet (4) is performed by resistance welding, cracking of the layer (2) due to welding heat is avoided. Further, since the spaces between the fibers in the sheet (4) and voids between the filler particles are filled with the repairing agent sol-gel solution, a substantially sealed repairing glass layer having less voids is formed integrally with the sheet (4) welded to the substrate (1).

EXAMPLE

Example 1: Adhesive Test of The Repairing Glass Layer

In order to examine the adhesion of the repairing glass layer, in accordance with the test set out in JISR4201 (test to observe the degree of exfoliation of the glass-covered metal substrate produced by dropping a 200g steel ball from a height of 45 cm), a test piece was prepared by coating an SS41 steel plate (6 mm thickness/80 mm square) with a glass layer (1 mm thickness), and producing a damaged area of about 60 mm square by grinding the glass layer and exposing the steel substrate.

A metallic fiber sheet (4) (about 5 mm thickness) made of SUS316 stainless steel fibers (about 12 micron diameter) was disposed on the damaged portion, and welded to the exposed steel surface by spot welds (5) at about 10 mm intervals, as shown in Figure 3, by means of a commercially available spot welder.

A repairing agent was prepared by stirring the ingredients listed in Table 2 constituting the sol-gel solution, at 25°C for one hour.

## TABLE 2

```
Silicon Tetraethoxide ..    ..    20 g
85% Phosphoric Acid    ..    ..    1 g
Ceramic Powder
  (Particle Size: 10-100 µm)    15 g
Ethanol       ..    ..    ..    ..    20 g
Water  ..    ..    ..    ..    ..    20 g
```

The metallic fiber sheet (4) welded to the damaged portion was impregnated with the repairing agent and dried to solidification for 30 minutes at room temperature under pressure from the plate (7) (55 mm square) made of mirror finished SUS316 stainless steel and held in place by a magnet (7a). After solidification, the repairing agent was vitrified by heating at 350°C for 10 minutes thereby to form together with the sheet (4) a repairing glass layer (6) (about 1 mm thickness).

Although the sol-gel glass exhibits strong adhesion to the substrate (1) due to reaction between the sol-gel glass and the iron forming an iron phosphate, the plate (7) and the repairing agent do not adhere to one another because the sol-gel glass does not react with the stainless steel.

Since the glass layer (6) still had voids therein at this stage, the repairing glass layer was finished by filling the voids with fresh repairing agent, but this time containing no ceramic powder, and repeating the steps of drying the agent to solidification and vitrifying the agent at 350°C for 10 minutes.

Example 2: Preparation of Comparative Repairing Glass Layer

A comparative repairing glass layer was prepared, not incorporating the sheet (4), but otherwise according to the method of Example 1.

Example 3: Comparative Adhesive Testing of the Repairing Glass Layer

Comparative tests on the adhesion of the repairing glass layer were carried out conforming to JISR4201 using both the repairing glass layer of Example 1 and the comparative glass layer of Example 2. The results of the tests were as follows:

## TABLE 3

### Minimum Height (cm) to Exfoliate The Repairing Glass Layer by 200g Steel Ball Dropping Test

| | |
|---|---|
| Comparison | 100* |
| Present Invention | 500** |

\* Ball Dropping Test from a height of less than 1m caused no damage on the dropping spot.
Ball Dropping Test from a height of 1m or more caused a large exfoliation of the repairing glass layer.

\*\* Ball Dropping Test from a height of less than 5m caused no damage on the dropping spot.
Ball Dropping Test from a height of 5m or more caused small damage on the dropping spot without any propagation such as large exfoliation of the repairing glass layer.

Example 4: Comparative Impact Test of The Repairing Glass Layer (Part 1)

Impact testing was performed using a high-pressure water jet (pressure: 130 kg/cm$^2$, nozzle diameter: 2 mm, distance between the nozzle and the sample: 1 m, operation time: one minute) and the effects of the impact on the repairing glass layer of Example 1 and on the comparative glass layer of Example 2 were observed.

The comparative glass layer came off over a wide area. In contrast thereto the repairing glass layer of Example 1 showed only small damage on the water-impacted spot without any enlarging exfoliation of the repairing glass layer.

Example 5: Comparative Impact Test of The Repairing Glass Layer (Part 2)

A high-pressure water jet test (pressure: 200 kg/cm$^2$) was performed with a swivel jet cleaner (13) installed at the center of a glass-lined reactor vessel (12) (2.5m$^{I.D}$ X 4m$^H$) shown in Figure 4, and the effects of the impact on the repairing glass layer of Example 1 and on the comparative glass layer of Example 2, both of which were formed on the inner wall of the reactor (12) were observed.

A one hour test caused an exfoliation of the comparative glass layer. On the other hand, no exfoliation of the repaired damaged portion according to Example 1 was found after an eight hour test.

## Claims

1. A method for repairing the glass layer of equipment having a glass lining on a metal substrate, comprising the steps of:-
   (a) grinding the damaged portion of the glass layer and exposing the metal substrate;
   (b) welding a metallic fiber sheet, shaped to suit the damaged area, to the metal substrate;
   (c) applying a vitrifiable repairing agent in the form of a sol-gel solution containing a metallic alkoxide to the metallic fiber sheet to impregnate the sheet, and solidifying the repairing agent;
   (d) heating the repairing agent to vitrify it at a temperature not high enough to cause damaging stress in the glass layer surrounding the damaged portion as a consequence of the difference in thermal expansion between the metal substrate and said surrounding glass layer; and
   (e) repeating the steps (c) and (d) with fresh repairing agent to fill any remaining voids in the repaired area.

2. A method according to Claim 1, wherein said vitrification temperature is in the range from 300°C to 350°C.

3. A method according to Claim 1 or Claim 2, wherein the repairing agent used in step (c) contains as a filler either glass or a ceramic in powder form but the repairing agent used in step (e) does not contain such filler.

4. A method according to any preceding claim, wherein the solidification of the repairing agent is carried out while the impregnated metallic fiber sheet is pressed down with a plate.

5. A method according to Claim 4, wherein said plate is held onto said metallic fiber sheet by a magnet.

6. A method according to any preceding claim wherein the metallic fiber sheet is welded to the metal substrate by spot welds or spaced linear welds formed by resistance welding.

## Patentansprüche

1. Verfahren zur Ausbesserung der Glasschicht einer Vorrichtung mit Glasbeschichtung auf einem Metallsubstrat bestehend aus den folgenden Schritten:
   (a) Schleifen des schadhaften Bereichs der Glasschicht und Freilegen des Metallsubstrats;
   (b) Schweißen einer die Form des schadhaften Bereichs aufweisenden Metallfaserplatte auf das Metallsubstrat;
   (c) Auftragen eines verglasbaren Ausbesserungsmittels in Form einer metallalkoxidhaltigen Sol-Gel-Lösung auf die Metallfaserplatte zwecks Imprägnierung der Platte und Erstarren des Ausbesserungsmittels;
   (d) Erwärmen des Ausbesserungsmittels zwecks Verglasung bei einer Temperatur, die nicht hoch genug ist, um eine Beschädigung an der den schadhaften Bereich umgebenden Glasschicht als Folge des Unterschieds der Wärmeausdehnung zwischen dem Metallsubstrat und der umgebenden Glasschicht hervorzurufen; und
   (e) die Wiederholung der Schritte (c) und (d) mit frischem Ausbesserungsmittel, um die restlichen Blasen in dem ausgebesserten Bereich zu füllen.

2. Verfahren gemäß Anspruch 1, wobei die Verglasungstemperatur zwischen 300°C und 350°C beträgt.

3. Verfahren gemäß Anspruch 1 oder Anspruch 2, wobei das in Schritt (c) verwendete Ausbesserungsmittel als Füllmittel entweder Glas oder eine Keramik in Pulverform enthält, das in Schritt (e) verwendete Ausbesserungsmittel jedoch ein solches Füllmittel nicht enthält.

4. Verfahren gemäß einem der obigen Ansprüche, wobei das Erstarren des Ausbesserungsmittels erfolgt, während die imprägnierte Metallfaserplatte mit einer Platte nach unten gedrückt wird.

5. Verfahren gemäß Anspruch 4, wobei die Platte durch ein Magnet auf der Metallfaserplatte gehalten wird.

**6.** Verfahren gemäß einem der obigen Ansprüche, wobei die Metallfaserplatte durch Punktschweißen oder lineares Widerstandsschweißen auf das Metallsubstrat geschweißt wird.

**Revendications**

**1.** Procédé pour réparer la couche vitreuse d'un dispositif ayant un revêtement de verre sur un substrat métallique, comprenant les étapes consistant à :

(a) égriser les parties endommagées de la couche vitreuse et à mettre à nu le substrat métallique ;

(b) souder, au substrat métallique, une feuille de fibres métalliques conformée pour s'adapter à la zone endommagée ;

(c) appliquer un agent réparateur vitrifiable, sous forme d'une solution sol-gel contenant un alkoxyde métallique, sur la feuille de fibres métalliques pour l'en imprégner et pour solidifier l'agent réparateur ;

(d) chauffer l'agent réparateur pour le vitrifier à une température pas assez élevée pour faire subir à la couche vitreuse environnante des efforts susceptibles d'occasionner des dégâts en raison d'une différence de dilatation thermique entre le substrat métallique et ladite couche vitreuse environnante ; et à

(e) répéter les étapes (c) et (d) avec de l'agent réparateur frais de manière à boucher d'éventuelles aspérités dans la zone réparée.

**2.** Procédé selon la revendication 1, caractérisé en ce que ladite température de vitrification est située dans la plage allant de 300 à 350 ° C.

**3.** Procédé selon la revendication 1 ou la revendication 2, caractérisé en ce que l'agent réparateur utilisé lors de l'étape (c) contient du verre ou une céramique en forme poudreuse en tant que matière de charge, alors que l'agent réparateur utilisé lors de l'étape (e) ne contient pas une telle matière de charge.

**4.** Procédé selon l'une quelconque des revendications précédentes, caractérisé en ce que la solidification de l'agent réparateur a lieu pendant que la feuille de fibres métalliques imprégnée est aplatie par une plaque.

**5.** Procédé selon la revendication 4, caractérisé en ce que ladite plaque est maintenue sur ladite feuille de fibres métalliques par un aimant.

**6.** Procédé selon l'une quelconque des revendications précédentes, caractérisé en ce que la feuille de fibres métalliques est soudée sur le substrat métallique à l'aide de points de soudure ou par des soudures linéaires espacées formées par soudage électrique par résistance.

Fig.1

Fig.2

Fig.3

Fig.4